# EUROPEAN PATENT APPLICATION

(11) **EP 1 813 336 A1**
(43) Date of publication of application: **01.08.2007**
(21) Application number: 05790471.6
(22) Date of filing: 29.09.2005
(51) Int. Cl.: B01D 21/26, B01D 21/01, B01D 21/28

(54) **COAGULATION-SEPARATION APPARATUS**

(30) Priority: 30.09.2004 JP 2004287920
(71) Applicant: Nishihara Environment Technology, Inc., Tokyo 108-0023 (JP)
(72) Inventor: YAMADA, Yasuo, Nishihara Envir. Tech., Inc., Tokyo 108-0023 (JP); KYOSAI, Shunsoku, Nishihara Envir. Tech., Inc., Tokyo 108-0023 (JP); MORIKAWA, Norimitsu, Nishihara Envir. Tech., Inc., Tokyo 108-0023 (JP); SATO, Minoru, Nishihara Envir. Tech., Inc., Tokyo 108-0023 (JP); NISHIHARA, Koji, Nishihara Envir. Tech., Inc., Tokyo 108-0023 (JP); NAGAMATSU, Shinichi, Nishihara Envir. Tech., Inc., Tokyo 108-0023 (JP); OURA, Masami, Nishihara Envir. Tech., Inc., Tokyo 108-0023 (JP); SAKURAI, Ryuma, Nishihara Envir. Tech., Inc., Tokyo 108-0023 (JP); MASE, Hiroko, Nishihara Envir. Tech., Inc., Tokyo 108-0023 (JP)
(74) Representative: Gahlert, Stefan
(86) International application number: PCT/JP2005/018496
(87) International publication number: WO 2006/036014

(57) **Abstract**

A coagulating and separating apparatus is provided with a coagulating and separating tank 1 into which raw water is introduced. The raw water flows from a mixing tank 2 to the coagulating and separating tank 1 through a raw water introducing pipe 3, an arrangement 4 for adding high specific gravity, and a raw water introducing pipe 5. A current generator 11 is provided in the coagulating and separating tank 1 for stirring water to be treated to generate water current. Under the coagulating and separating tank 1, a sludge discharge opening 13 and a sludge collection box 14 are provided. The sludge in the sludge collection box 14 is transferred to a separator 8 through a sludge transfer pipe 15. The separator 8 separates material with high specific gravity from the sludge and supplies it into the arrangement 4 for adding the material with high specific gravity.

## Description

### FIELD OF THE INVENTION

The present invention relates to a coagulating and separating apparatus in which starting water (for example, raw water, inflow water) to be treated including suspended substance such as colloidal matter or minute particle is mixed with coagulant, suspended substance is coagulated so as to form floc (coagulated sludge), and the floc is subjected into solid-liquid separation from the starting water so that clean water can be continuously obtained.

### BACKGROUND OF THE INVENTION

A conventional coagulating and separating apparatus of this kind is provided with a coagulation reaction tank. The starting water to be treated including suspended substance etc. flows in the coagulation reaction tank through a raw water introduction pipe. Coagulant is added from a coagulant supplying means to the water to be treated flowing in the coagulation reaction tank. Insoluble additives such as sand are supplied from an additive supplying means to the water to be treated flowing in the coagulation reaction tank. Furthermore, the coagulating and separating apparatus is provided with a mixture draw-out means, a solid-liquid separation tank, a pump, a return pipe, and an additive recovery device. The mixture draw-out means draws a mixture out of the coagulation reaction tank. The solid-liquid separation tank subjects outflow water from the coagulation reaction tank to solid-liquid separation. The pump is configured as a separated object draw-out means for drawing separated object out of the solid-liquid separation tank. The additive recovery device separates the additives included in the separated object that is returned from the pump through the return pipe and recovers the same. The additive recovery device further returns the recovered additives to the coagulation reaction tank and discharges the separated sludge to the outside of the system (See Patent Document 1, for example).

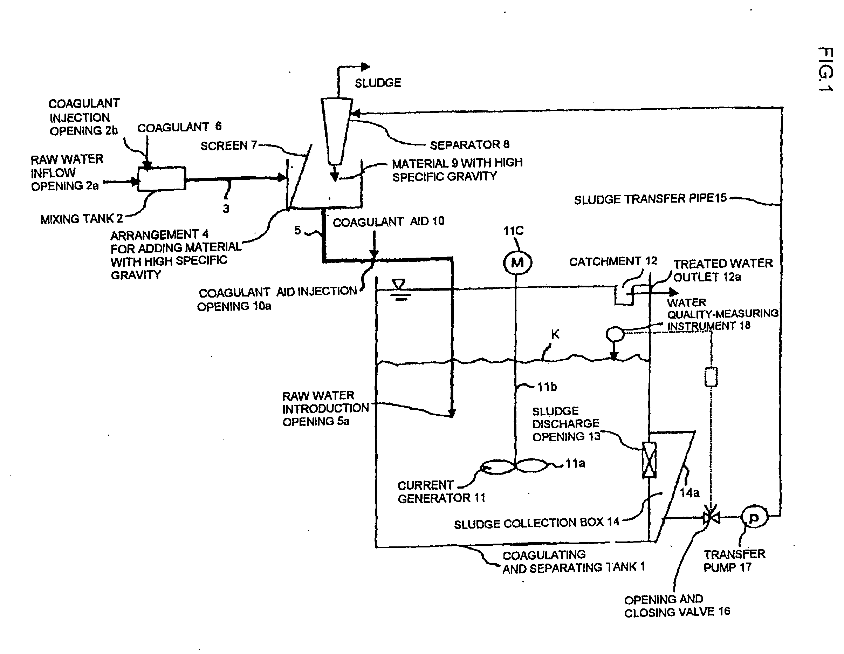

Patent Document 1: Japanese Patent Unexamined Publication No.2003-326110 (Page 2, lines 14-26 of right column, FIG. 1)

The conventional coagulating and separating apparatus separates the floc from the water to be treated by utilizing gravity in the solid-liquid separation tank, after adding coagulant in the coagulation reaction tank so as to form the floc. Therefore, there is a problem such that large overall facility site size is necessary, because the solid-liquid separation tank is additionally necessary and because the solid-liquid separation tank has at least the same size as that of the coagulation reaction tank. Furthermore, since the floc is separated from the water to be treated by utilizing gravity, treatment cannot be performed in a velocity exceeding a settling velocity of the floc. Thus, the treating efficiency is bad.

### SUMMARY OF THE INVENTION

The present invention is done to solve the problem described above. The present invention has an object to provide a coagulating and separating apparatus that can decrease the facility site size and perform solid-liquid separation more quickly and stably, in other words, that can cut the facility site size, shorten a treating time, and perform treatment stably.

A coagulating and separating apparatus according to the present invention is characterized by comprising a coagulating and separating, tank, a current generator, and a sludge transfer pipe. Raw water mixed with coagulant flows in the coagulating and separating tank. The current generator generates circulating or swirl flow in the coagulating and separating tank. The sludge transfer pipe transfers coagulated sludge.

Preferably, a draft tube is provided in the coagulating and separating tank. A material with a high specific gravity is present in the coagulating and separating tank. A separator is provided on the sludge transfer pipe for separating the material with high specific gravity so as to circulate the same into the coagulating and separating tank. A porous member is provided above the draft tube. A raw water introduction pipe is provided for introducing the raw water mixed with coagulant into the draft tube. The current generator is configured as a stirrer with an axial-flow type of stirring vanes. A sludge collection box is provided for thickening the coagulated sludge. A line mixer is provided for mixing the coagulant with the raw water. A water quality-measuring instrument is provided in the coagulating and separating tank. In addition, a catchment is provided for the treated water to be introduced.

The present invention utilizes the coagulant for forming the floc and utilizes the current generator for generating swirl flow. Thus, the present invention allows the floc to be continuously separated in one coagulating and separating tank. In other words, since coagulating and separating can be performed instantaneously, forming the floc and solid-liquid separation can be done in the same coagulating and separating tank. In addition, since solid-liquid separation can be done efficiently and stably, the conventional solid-liquid separation tank requiring a wide facility site size etc. is not necessary. The whole apparatus is miniaturized. The cost of construction lowers.

If the draft tube is provided, it is possible to set a residence time to about two to three minutes and to maintain SS removal rate of 80% or more. If a condition of the floc in the coagulating and separating tank or a condition of the treated water is always measured, it is possible to maintain a stable interface and an appropriate amount of the floc at all time. Furthermore, it is possible to perform treatment continuously stably.

If the treated water mixed with the coagulant is flowed into the coagulating and separating tank and stirred by means of the current generator, it is possible to generate the swirl flow in the coagulating and separating tank. In addition, if the draft tube is arranged so as to surround the current generating means and if a horizontal guide plate and a vertical guide plate are further arranged, it is possible to form the swirl flow smoothly. Furthermore, if a porous member is arranged, it is possible to generate horizontal flow (centripetal flow for example) and swirl flow (downflow, for example) more stably as controlling the flowing velocity in the upward direction. Therefore, it is possible to stabilize efficiency of treatment.

If, not only coagulant as used for conventional coagulation and settlement treatment is added, but also the material with high specific gravity is injected, and further coagulant aid is added, it is possible to form a floc larger than the past. In such a case, since the mass of the floc increases, it is possible to raise the treatment velocity, shorten the residence time, and perform treatment efficiently and stably. And if the material with high specific gravity to be contributed in a coagulating reaction is drawn out of the sludge collection box, transferred to the separator, separated from the sludge, and supplied continuously to the treated water, it is possible to reuse the material with high specific gravity. Maintenance and control costs can be reduced.

### BRIEF DESCRIPTION OF THE DRAWINGS

FIG. 1 is a block diagram showing a first embodiment of a coagulating and separating apparatus according to the present invention.
FIG. 2 is a block diagram showing a second embodiment of a coagulating and separating apparatus according to the present invention.
FIG. 3 is a main block diagram showing a third embodiment of a coagulating and separating apparatus according to the present invention.
FIG. 4 is a main block diagram showing a fourth embodiment of a coagulating and separating apparatus according to the present invention.
FIG. 5 is a main block diagram showing a fifth embodiment of a coagulating and separating apparatus according to the present invention.
FIG. 6 is a main block diagram showing a sixth embodiment of a coagulating and separating apparatus according to the present invention.
FIG. 7 is a main block diagram showing a seventh embodiment of a coagulating and separating apparatus according to the present invention.
FIG. 8 is a main block diagram showing an eighth embodiment of a coagulating and separating apparatus according to the present invention.
FIG. 9 is a main block diagram showing a ninth embodiment of a coagulating and separating apparatus according to the present invention.
FIG. 10 is a main block diagram showing a 10th embodiment of a coagulating and separating apparatus according to the present invention.
FIG. 11 is a main block diagram showing an 11th embodiment of a coagulating and separating apparatus according to the present invention.
FIG. 12 is a main block diagram showing a 12th embodiment of a coagulating and separating apparatus according to the present invention.
FIG. 13 is a main block diagram showing a 13th embodiment of a coagulating and separating apparatus according to the present invention.
FIG. 14 is a plan view showing a mode of arranging a plurality of coagulating and separating apparatuses.
FIG. 15 is a plan view showing a mode of arranging a plurality of coagulating and separating apparatuses.
FIG. 16 is a plan view showing a mode of arranging a plurality of coagulating and separating apparatuses.
FIG. 17 is a plan view showing a mode of arranging a plurality of coagulating and separating apparatuses.
FIG. 18 is a plan view showing a mode of arranging a guide plate.
FIG. 19 is a perspective view showing a trough for use in a catchment.
FIG. 20 is a perspective view showing a trough for use in a catchment.
FIG. 21 is a perspective view showing a trough for use in a catchment.
FIG. 22 is a partial cross sectional view showing a trough for use in a catchment.
FIG. 23 is a partial cross sectional view showing a trough for use in a catchment.
FIG. 24 is a partial cross sectional view showing a catchment using a filtering material.
FIG. 25 is a partial cross sectional view showing a catchment using a filtering material.

### DESCRIPTION OF THE PREFERRED EMBODIMENTS

### FIRST EMBODIMENT

FIG. 1 is a block diagram showing a first embodiment of a coagulating and separating apparatus according to the present invention. The coagulating and separating apparatus is provided with a coagulating and separating tank 1 for coagulating suspended substance etc. in raw water so as to perform solid-liquid separation. The raw water flows from a mixing tank 2 into the coagulating and separating tank 1 through a raw water introduction pipe 3, an arrangement 4 for adding material with high specific gravity, and a raw water introduction pipe 5. The mixing tank 2 has a raw water inflow opening 2a and a coagulant injection opening 2b. The raw water flows in the raw water inflow opening 2a. The coagulant injection opening 2b is provided for injection of coagulant 6. The mixing tank 2 maintains the turbulence in the raw water in some residence time. The mixing tank 2 reacts suspended substance in the raw water with the coagulant 6 to form a floc. In the arrangement 4 for adding material with high specific gravity, a screen 7 is installed for eliminating an impurity from the raw water, A separator 8 is installed above the arrangement 4 for adding material with high specific gravity. A material 9 with high specific gravity is added from the separator 8 into the arrangement 4 for adding the material with high specific gravity. The raw water introduction pipe 5 is provided downstream the arrangement 4 for adding material with high specific gravity. Coagulant aid 10 is injected from a coagulant aid injection opening 10a into the raw water introduction pipe 5. Adding the coagulant aid 10 makes contact between the material 9 with high specific gravity and the floc efficiently to form the heavy floc, resulting in good solid-liquid separation.

In the mixing tank 2, it is preferable to provide a stirrer for forming the turbulence, which is not shown in the figure. A position of the raw water introduction opening 5a of the raw water introduction pipe 5 is set so that easily riding on the turbulence in the coagulating and separating tank 1 can be performed. The position of the screen 7 is not limited if it is at the upstream of the coagulating and separating tank 1. To prevent closing of the separator 8, however, the screen 7 is preferably provided upstream where the material 9 with high specific gravity is added. Even if it is installed before the mixing tank 2, no trouble will occur. It goes without saying that the screen 7 does not need to be installed if the raw water does not include the impurity. The position of adding the coagulant aid 10 with the material 9 with high specific gravity is set so that the material 9 with high specific gravity and the coagulant aid 10 will react instantaneously to promote formation of the floc. Although the position of adding the material 9 with high specific gravity may be at the upstream side of the coagulating and separating tank 1, the material 9 with high specific gravity is preferably added between the coagulating and separating tank 1 and the mixing tank 2. The position of adding the coagulant aid 10 may be before the mixed liquid flows in the coagulating and separating tank 1. The position of adding the coagulant aid 10 may also be where the coagulant aid 10 is sufficiently mixed directly after the mixed liquid is introduced near the raw water introduction opening 5a in the coagulating and separating tank 1.

In the middle of the coagulating and separating tank 1, a current generator 11 is provided for stirring the flowing mixed liquid (the liquid mixed with the raw water and the coagulant 6), namely the water to be treated, so as to generate water current. At the upper part of the coagulating and separating tank 1, a catchment 12 is provided for collecting the treated water obtained by performing solid-liquid separation. The treated water is introduced from the catchment 12 to the outside of a system through the treated water outlet 12a. At the lower part of the coagulating and separating tank 1, a sludge discharge opening 13 is provided for discharging the sludge separated from the water to be treated. At the lower outside of the coagulating and separating tank 1, a sludge collection box 14 is provided for collecting the sludge from the sludge discharge opening 13. The sludge in the sludge collection box 14 is transferred to the separator 8 through a sludge transfer pipe 15. An opening and closing valve 16 and a transfer pump 17 are arranged on the sludge transfer pipe 15 from the side of the sludge collection box 14 in order. The coagulating and separating tank 1A is provided with a water quality-measuring instrument 18 for measuring water quality at a sludge interface K. The water quality-measuring instrument 18 is connected with the opening and closing valve 16 so as to actuate the opening and closing valve 16 on the basis of signals from the water quality-measuring instrument 18.

The coagulating and separating tank 1 is preferably configured in a cylindrical shape. The coagulating and separating tank 1 may be configured, however, in a cubic (rectangular parallelepiped) in considering effective use of the space and the cost of building. The coagulating and separating tank 1 may be a polygon instead of a plane shape. In such a case, preferably it has a shape of an even and symmetric polygon. If comparing tall with short in the same capacity, the latter is not appropriate for generating swirl flow even in the same capacity. Therefore, the height of the coagulating and separating tank 1 is preferably larger than the length in a lateral direction (diameter or width). In other words if the shape of the coagulating and separating tank 1 is cylindrical, a ratio of the height to the diameter is set to be one or more. If it has a shape of a rectangular parallelepiped, a ratio of the height to the length in the lateral direction is set to be one or more. Even if the coagulating and separating tank 1 is long in the lateral direction, however, arranging a divider in the coagulating and separating tank 1 allows generating smooth swirl flow. In the similar case, if a diameter at the upper part of the coagulating and separating tank 1 is larger than a diameter of the lower part of the same, it is possible to slow a rising velocity of the swirl flow at the upper part of the coagulating and separating tank 1 compared to the lower part. Thus, it is possible to generate the sludge interface K effectively.

Inorganic coagulant of iron series and aluminum series with large numbers of ionic charge is used for the coagulant 6. Poly aluminum chloride, aluminum sulfate, ferric chloride, ferric sulfate etc. can be shown as such kind of the inorganic coagulant. The kind of the coagulant 6 is not limited, however, if it is possible to form the floc sufficiently.

The separator 8 separates the material 9 with high specific gravity from the coagulated sludge flowing from the sludge transfer pipe 15. The separator 8 reuses the material 9 with high specific gravity. The separator 8 is configured as a hydrocyclone in the first embodiment. The separator 8 supplies the material 9 with high specific gravity obtained by separation into the arrangement 4 for adding the material with high specific gravity. The separator 8 discharges the sludge remained therein to the outside of the system. It is possible to use other types of apparatuses as the separator 8, if they can separate the sludge from the material 9 with high specific gravity. It is possible to use a classifying tank for stripping the sludge attached to the material 9 with high specific gravity to remove by stirring, mixing, or falling, for example. It goes without saying that the material 9 with high specific gravity may be discharged together with the sludge to the outside of the system, if the material 9 with high specific gravity is not reused.

An object to add the material 9 with high specific gravity to the mixed liquid (liquid mixed with the raw water and the coagulant 6) is to raise an apparent specific gravity of the floc. It is possible to use a material with the specific gravity of one or more, minute sands for example, as the material 9 with high specific gravity. The minute sands have the specific gravity of 2.6, a uniformity coefficient of 1.7, and an effective size of about 100µm. It is possible to use an inorganic or organic material with the specific gravity of 2 to 8 approximate to that of the minute sands, Or it is possible to use a mixture of the material with the minute sand. A preferable range of specific gravity for the material 9 with high specific gravity on driving the coagulating and separating apparatus is 2.0 to 3.0. There are garnet, super ash (manufactured by Tokyo Metropolis), zirconium oxide, anthracite etc. as such kind of the material 9 with high specific gravity. In addition, it is possible to use highmolecular coagulant such as anion type or nonion type as the coagulant aid 10.

The current generator 11 is configured as a means for forming a turbulent area with a shearing force of stirring without destroying the floc. The current generator 11 is configured as a means for contacting a micro-floc with the material 9 with high specific gravity etc. to form a large floc. The current generator 11 is configured as a stirrer with an axial-flow type of stirring blades 11a. The current generator 11 is provided with a drive shaft 11b and a motor 11c. The drive shaft 11b extends vertically and upwardly from the stirring blades 11a. The motor 11c drives to rotate the drive shaft 11b. Depending on the facility condition, the drive shaft 11b may extend in the lateral direction The axial flow type of the current generator 11 can generate a large discharging amount in a small static pressure. It is possible to use not only the stirrer with the axial flow type of the stirring blades 11a but also a pump, fan, ejector etc. as the current generator 11. Although the current generator 11 is preferably a variable-rotation type, it may be a non-variable-rotation type depending on the driving condition of the coagulating and separating apparatus. Further, it is possible to use other means for satisfactorily generating the swirl flow as the current generating device 11, e.g. a jet-generating device such as a circulator.

The catchment 12 introduces the treated water overflowing from the coagulating tank 1 so as to remove the floc in the treated water in the first embodiment. The treated water is transferred through the treated water outlet 12a to the outside of the system. The catchment 12 can be provided with a filtering device. The filtering device can take a form of a rotating disk. It is possible to use a filtering device with a filtering member or a membrane-filtering device with a separation membrane or a filter cloth. Further, it may be a trough appropriate for properties of the treated water, e.g. a submerged type-trough. Such a catchment or a trough will be described later again.

An object to provide the sludge collection box 14 is to draw the coagulated sludge out of the coagulating and separating tank 1 so as to prevent the sludge interface K from rising, in case of increasing the concentration of the sludge in the coagulating and separating tank 1. The sludge collection box 14 is formed of an inclined wall 14a tilting and extending upwardly from the outer surface of the bottom of the coagulating and separating tank 1. The sludge collection box 14 receives the coagulated sludge from the sludge discharge opening 13 in between the coagulating and separating tank 1 and the inclined wall 14a. In the first embodiment, the sludge collection box 14 is provided at the lower outside of the coagulating and separating tank 1. The position is not limited to the outside however, even if it does not disturb the swirl flow and if it is appropriate for coagulation of the sludge. In the sludge collection box 14, the coagulated sludge is thickened in order to reduce a circulating rate for recycling the material 9 with high specific gravity and to reduce the amount of the sludge to be discharged to the outside of the system. The coagulated sludge in the sludge collection box 14 is drawn out by means of the transfer pump 17.

The sludge transfer pipe 15 draws the coagulated sludge out of the sludge collection box 14 through the opening and closing valve 16 and the transfer pump 17. Thus the sludge transfer pipe 15 controls the density of a solid in the coagulating and separating tank 1. The sludge transfer pipe 15 supplies the drawn-out coagulated sludge into the separator 8. The sludge transfer pipe 15 serves to separate the material 9 with high specific gravity out of the coagulated sludge and circulate the same. In other words, the material 9 with high specific gravity is added to the raw water in certain concentration in order to contribute the material 9 with high specific gravity to coagulating reaction. The concentration is controlled depending on the amount of the drawn-out coagulated sludge by means of the transfer pump 17. It goes without saying that the material 9 with high specific gravity can be discharged together with the coagulated sludge to the outside of the system without installing the separator 8, if the material 9 with high specific gravity is not recycled.

The water quality-measuring instrument 18 continuously measures the condition of the floc in the coagulating and separating tank 1. In other words, the water quality-measuring instrument 18 watches excessive accumulation of the floc in the coagulating and separating tank 1. The water quality-measuring instrument 18 can be configured as an interface meter, a concentration meter, or a turbidimeter etc. Usually, the sludge interface K rises as rising of the concentration of the floc in the coagulating and separating tank 1. The water quality-measuring instrument 18 always measures the sludge interface K in the coagulating and separating tank 1. If the flock accumulates excessively, the water quality-measuring instrument 18 automatically opens the opening and closing valve 16 to draw out the surplus floc as the coagulated sludge. Thus, the water quality-measuring instrument 18 equilibrates the amount of the floc in the coagulating and separating tank 1 and controls the sludge interface K so as not to flow the floc out to the side of the treated water. In order to continuously watch the condition of the floc in the coagulating and separating tank 1, it is possible to utilize not only a method of measuring the condition of the floc in the coagulating and separating tank 1 but also a method of measuring the turbidity or transparency of the treated water or a method combining thereof.

It is preferable to control the distance between a water surface in the coagulating and separating tank 1 and the sludge interface K always to be 1.0mm or more so that the coagulating and separating apparatus can be satisfactorily driven. It is reasonable to adjust the sludge concentration to be about 7 to 14%. In other words, it is preferable to set the amount of drawing out of the coagulated sludge relative to the inflow raw water to be about 3 to 10%. It is also preferable to set the concentration in the coagulating and separating tank 1 to be about 0.5 to 3%. To do so, a certain amount of the coagulated sludge is drawn out of the coagulating tank 1 in a pertain period of time by means of the opening and closing valve 16 and the transfer pump 17. In addition, the certain amount of the coagulated sludge is transferred to the separator 8 through the sludge transfer pipe 15. Then, the material 9 with high specific gravity is separated from the coagulated sludge in the separator 8. The remaining sludge is discharged to the outside of the system. Thus, the floc is prevented from being flowed out to the side of the treated water. The treated water is prevented from being worsened.

Next, operation of the coagulating and separating apparatus in the first embodiment will be described. When the coagulant 6 mixes with the raw water flowing in the mixing tank 2 from the coagulant injection opening 2b, the suspended substance in the raw water reacts with the coagulant 6 to floc. The mixed liquid (liquid mixed with the raw water and the coagulant 6) thus flocced flows into the arrangement 4 for adding the material with high specific gravity through the raw water introduction pipe 3. During such, the screen 7 removes the impurity in the raw water and prevents the separator 8 from closing. In the arrangement 4 for adding the material with high specific gravity, the material 9 with high specific gravity mixes into the mixed liquid (liquid mixed with the raw water and the coagulant 6) from the separator 8. Then, the mixed liquid (liquid mixed with the raw water and the coagulant 6) including the material 9 with high specific gravity flows in the raw water introduction pipe 5, during which the coagulant aid 10 mixes into the mixed liquid (liquid mixed with the raw water and the coagulant 6) from the coagulant aid injection opening 10a.

Thus the mixed liquid (liquid mixed with the raw water and the coagulant 6) including the material 9 and the coagulant aid 10 flows from the raw water introduction opening 5a into the coagulating and separating tank 1 to form water to be treated. In the coagulating and separating tank 1, the current generator 11 operates to generate circulating or swirl flow in the water to be treated. The total amount of the swirl flow becomes a sum of the water to be treated in the coagulating and separating tank 1 in advance and the raw water newly added from the raw water introduction opening 5a. The swirl flow becomes a downflow in the middle of the coagulating and separating tank 1. Then the swirl flow becomes a horizontal flow (radial flow) at the bottom of the coagulating and separating tank 1. After that, the swirl flow becomes an upflow. Further the swirl flow becomes a horizontal flow (centripetal flow) near the sludge interface K. Such a swirl flow reacts the suspended substance with the material 9 with high specific gravity and the coagulant aid 10, thereby generating the floc efficiently. The floc integrates with the material 9 with high specific gravity to show an apparent high specific gravity. In other words, it settles as circulating in the coagulating and separating tank 1 faster than the velocity of rising of the water to be treated to form the sludge interface. Then the coagulated sludge at the lower part flows out to the sludge collection box 14 through the sludge discharge outlet 13. The treated water at the upper part overflows to the catchment 12. Thus, formation of the floc and solid-liquid separation progresses simultaneously in the coagulating and separating tank 1.

During such, the coagulated sludge in the sludge collection box 14 flows into the separator 8 through the sludge transfer pipe 15, while the water quality-measuring instrument 18 measures the water quality at the sludge interface K in the coagulating and separating tank 1 to output the signals to the opening and closing valve 16. In other words, to keep the concentration of the material 9 with high specific gravity relative to the water to be treated in the coagulating and separating tank 1, the water quality-measuring instrument 18 changes an opening of the opening and closing valve 18 to draw out the excessive floc in the coagulating and separating tank 1 as the coagulated sludge, thereby balancing the amount of the floc in the coagulating and separating tank 1. The separator 8 separates the material 9 with high specific gravity from the coagulated sludge. The separator 8 returns the separated material 9 with high specific gravity to the instrument 4 for adding the material with high specific gravity.

The coagulating and separating apparatus of the first embodiment utilizes formation of the floc with the coagulant 6 and utilizes the swirl flow from the current generator 11. Thus the coagulating and separating apparatus can perform a separation process of the floc in one coagulating and separating tank 1 continuously. Therefore, no solid-liquid separation tank other than the conventional coagulating reaction tank is necessary. It is possible to reduce the necessary space. In such a configuration, since the mixing tank 2 is provided for mixing the coagulant 6 into the raw water, it is possible to efficiently mix the coagulant 6 with the raw water and quickly to floc the raw water reliably. In addition, since the screen 7 is provided upstream where the material 9 with high specific gravity is added, it is possible to prevent the separator 8 from clogging and improve the efficiency of coagulation in the coagulating and separating tank 1 stably. Since the separator 8 is configured as the hydrocyclone, it is possible to suppress rising of the facility cost. Since the material 9 with high specific gravity is added to the mixed liquid (liquid mixed with the raw water and the coagulant 6), it is possible to form the large floc and improve the treating velocity.

### SECOND EMBODIMENT

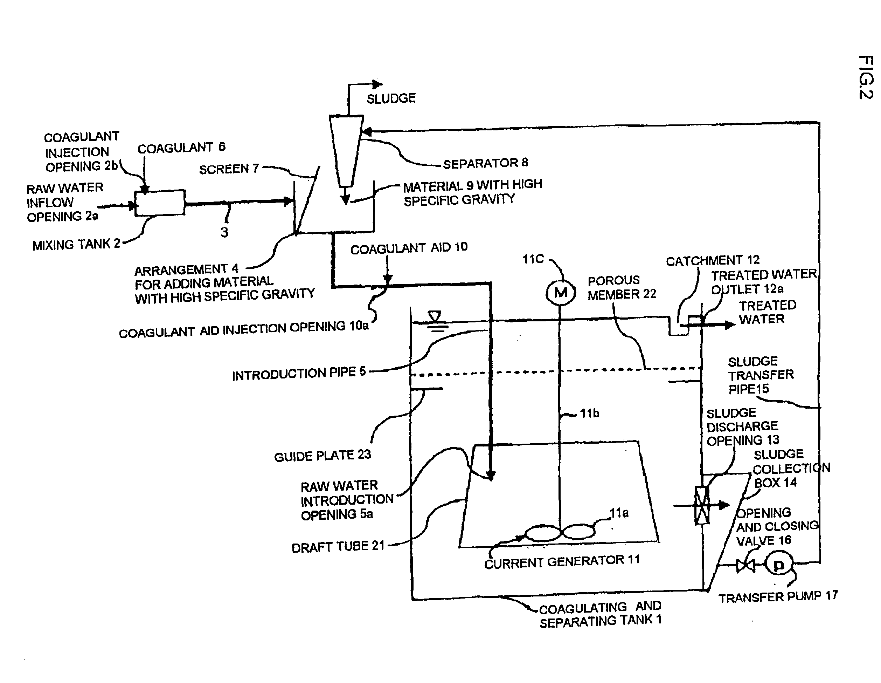

FIG. 2 is a block diagram showing a second embodiment of a coagulating and separating apparatus according to the present invention. A repeated description will be omitted. The same reference numerals designate the same parts of the embodiment shown in FIG. 1. In the coagulating and separating apparatus according to the second embodiment, a draft tube 21 is provided in the middle of the coagulating and separating tank 1. A porous member 22 is arranged horizontally near the sludge interface. In addition, under the porous member 22, a guide plate 23 is provided on an inner surface of the coagulating and separating tank 1. The shape of the tank of the coagulating and separating tank 1 is rectangular.

In the second embodiment, the vertical position of the current generator 11 is in the middle in the draft tube 21. The horizontal position of the stirring blades 11a is at the bottom of the draft tube 21. It is necessary to supply the material 9 with high specific gravity before being stirred in the draft tube 21. Therefore the raw water introduction opening 5a of the raw water introduction pipe 5 is preferably provided inside or directly above the draft tube 21 so that the mixed liquid (liquid mixed with the raw water and the coagulant 6) including the material 9 with high specific gravity and the coagulant aid 10 will easily ride on the swirl flow moving in the draft tube 21. If the raw water easily rides on the swirl flow, however, the position of the raw water introduction opening 5a of the raw water introduction pipe 5 may be in the draft tube 21, at the lower area of the draft tube 21, or the upper area of the draft tube 21. Besides, the raw water introduction opening 5a of the raw water introduction pipe 5 can be introduced from a cut part where the drive shaft 11b of the current generator 11 penetrates the porous member 22.

The shape of the draft tube 21 has a cylindrical shape with openings in a vertical direction due to easy manufacturing and the low cost. In detail, the draft tube 21 is formed of a tapered round pipe, where an opening at the lower part of the draft tube 21 is larger than an opening at the upper part thereof in diameter. In other word, it is formed of a round pipe with a conical outer shap so as to easily change the swirl flow from the downflow to horizontal flow (radial flow). If a horizontal cross section inside the draft tube 21 is identified with a horizontal cross section outside the draft tube 21, it is possible to form the stable swirl flow and to promote solid-liquid separation satisfactorily. The shape of the draft tube 21 is not limited if it has a structure such that it can easily change the swirl flow from the downflow to the horizontal flow (radial flow), namely a structure such that it can aid the flow of fluid to generate the swirl flow. It can be a center well or a casing etc., a polygon close to a circle, or a conical outer shape of broadening and thickening toward the lower part thereof.

The distance between the bottom surface of the coagulating and separating tank 1 and the bottom surface of the draft tube 21 is preferably about 75% of the diameter of the stirring blades 11a of the current generator 11. The vertical position of the stirring blades 11a of the current generator 11 preferably does not protrude from the draft tube 21, although it is located at the lower part in the draft tube 21 as described above. The vertical position of the stirring blades 11a of the draft tube 21 is, however, not limited if it provides efficient swirl flow.

The porous member 22 can substitute for the water quality-measuring instrument 18 of the first embodiment, e.g. a plate with numerous openings. The porous member 22 is installed for forming the sludge interface stably, preventing the floc from flowing out upwardly, removing disorderly treated water to generate straight flow, so that good and stable treated water can be obtained. In other word, the porous member 22 divides the inner part of the coagulating and separating tank 1 vertically, easily generates straight flow above the porous member 22, and easily generates floc-forming area (sludge area) below the same. It is possible to use a punching metal, net, plate for straight flow, inclined plate, slit, honeycomb member etc. as such kind of the porous member 22.

If the plate, net, or punching metal is used for the porous member 22, it is possible to provide more than one of it discontinuously. Although the porous member 22 is configured as a plane, it is possible to use other convex or concave shapes, for example. In addition, it is possible to change an opening of the porous member 22 corresponding the properties of the raw water. If the opening of the porous member 22 is 50%, for example, a facility site size of the trough of the catchment 12 is preferably 1/2 or below of a facility site size of the porous member 22, In other words, the velocity of the treated water passing through the porous member 22 may be identical to the velocity of the treated water rising on the water surface other than trough or below.

A guide plate 23 changes the rising flow rising between the inner surface of the coagulating and separating tank 1 and the outer surface of the draft tube 21 into the horizontal flow (centripetal flow) smoothly in a baffle effect. The guide plate 23 is an annular and flat plate protruding horizontally from the inner surface of the coagulating and separating tank 1. In the coagulating and separating apparatus of the second embodiment, it is possible to generate the swirl flow by means of only the current generator 11. In order to efficiently generate the reliable and stable swirl flow, however, both of the draft tube 21 and the guide plate 23 are provided. Particularly, if the coagulating and separating tank 1 has a shape with corners, a quadrangle shape for example, the guide plate 23 is preferably provided with the guide plate 23 horizontally. If the coagulating and separating tank 1 has a circular shape, it is preferable to provide the guide plate 23 for stably generating the swirl flow and preventing the same form co-rotation. In addition, it is preferable to provide the guide plates 23 in both horizontal and vertical directions. This type of the guide plates 23 can be curved plate instead of flat plates.

Next, operation of the coagulating and separating apparatus of the second embodiment will be described. The raw water flowing from the raw water introduction opening 5a into the draft tube 21, namely the water to be treated mixed the raw water with the coagulant 6, the material 9 with high specific gravity, and the coagulant aid 10 is stirred by means of the current generator 11 immediately. Then, the current generator 11 in the draft tube 21 stirs the water to be treated to form a turbulent state. Thus the floc with high specific gravity is formed. Then, the flow of the water to be treated becomes the downflow at the lower part of the draft tube 21, turns into the horizontal flow (radial flow) at the lower end thereof, and becomes the vertical rising flow between the inner surface of the coagulating and separating tank 1 and the outer surface of the draft tube 21. The rising flow turns into the horizontal flow (centripetal flow) between the upper end of the draft tube 21 and the porous member 22 by the downflow generated in the draft tube 21. The floc rides on such a swirl flow and transfers in the draft tube 21 again. During such, the guide plate 23 aids the swirl flow to easily change from the upflow to the horizontal flow (centripetal flow). Thus the sludge interface is formed. The treated water passes through the porous member 22 and overflows to the catchment 12.

Here, suppose that the velocity of the treated water passing through the porous member 22 is V. If the horizontal flow or the downflow in a velocity larger than the velocity V is generated under the water to be treated rising in the velocity V in the coagulating and separating tank 1, even the floc with the lower settling velocity than the velocity V rides on the horizontal flow or the downflow. Since the velocity thereof is high, it is difficult to ride on the upflow. In other words, since the floc receives the large force from the swirl flow, it moves away from the upflow. Therefore, even if the floc moves in the settling velocity lower than the rising velocity V, it can be subjected to solid-liquid separation. It is possible to separate the floc in the small coagulating and separating tank 1.

In order to perform efficient solid-liquid separation with the swirl flow, it is preferable to form a small and heavy floc, namely a heavy floc with large mass and small flow resistance. In the second embodiment, since the material 9 with high specific gravity and the coagulant aid 10 are added to the mixed liquid (liquid mixed with the raw water and the coagulant 6), efficiency of solid-liquid separation improves. Since the floc is heavy, the floc concentration at the lower part of the coagulating and separating tank 1 becomes high. The number of collision between the flocs and the number of collision between raw particles and the floc in a coagulating part increase. Coagulating effect improves. It is possible to miniaturize the apparatus.

Thus, the coagulating and separating apparatus of the second embodiment can promote the process of solid-liquid separation without settling the floc with the gravity. This is done by enlarging the flow velocity of the swirl flow caused by stirring of the current generator 11, namely the horizontal flow (centripetal flow) generated between the inner surface of the coagulating and separating tank 1 and the upper end of the draft tube 21 relative to the flow velocity of rising the water to be treated. Furthermore, the water to be treated including the material 9 with high specific gravity and the coagulant aid 10 is stirred just after being flowed in the coagulating and separating tank 1. Then, it is possible to disperse the coagulant aid 10 uniformly. Adding the material 9 with high specific gravity forms the colloidal matter or suspended substance in the water to be treated into the large floc around the material 9 with high specific gravity. Thus, it is possible to perform solid-liquid separation more efficiently. Furthermore, removal with a removal rate of 80% or more is possible in two or three minutes. In this case, it is necessary to include the material 9 with high specific gravity in the floc with the certain concentration relative to the inflow water (the raw water, the water to be treated not including the coagulant 6). Therefore, the concentration on adding relative to the amount of the inflow water is preferably set at 3,000 to 5,000mg/L. It is possible to change the concentration on adding, however, depending on the water quality or properties such as viscosity of the water.

### THIRD EMBODIMENT

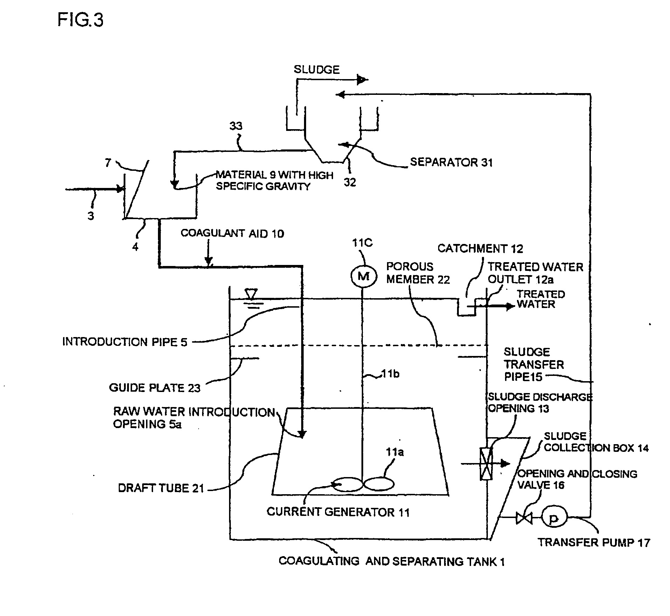

FIG. 3 is a main block diagram showing a third embodiment of a coagulating and separating apparatus according to the present invention. A repeated description will be omitted. The same reference numerals designate the same parts of the embodiment shown in FIG. 2. The hydrocyclone is used for the separator 8 in the second embodiment similarly to the first embodiment The separator 31 in the third embodiment, however, separates the material 9 with high specific gravity from the sludge from the sludge transfer pipe 15 by the influence of gravity and returns the material 9 with the separated high specific gravity into the arrangement 4 for adding the material with high specific gravity. The separator 31 is provided with the tank 32 for receiving the sludge out of the sludge transfer pipe 15. In the tank 32, the material 9 with high specific gravity with a relatively heavy weight from the sludge flowing out of the sludge transfer pipe 15 is settled by the influence of gravity. The material 9 with high specific gravity with a relatively lightweight is overflowed from the upper part of the tank 32. The material 9 with high specific gravity settled in the tank 32 is supplied to the arrangement 4 for adding the material with high specific gravity The sludge overflowing from the tank 32 is transferred to the outside of the system. In the separator 31 of the third embodiment, the settling velocity of the material 9 with high specific gravity is about 70m/h, while the settling velocity of the sludge is about 3~4m/h. The settling velocity of the material 9 with high specific gravity is extremely large compared to the settling velocity of the sludge Therefore, it is possible to separate the material 9 with high specific gravity by the influence of gravity in a short time of about five minutes. Even in the coagulating and separating apparatus of the third embodiment, it is possible to obtain the similar effect to that of the second embodiment.

### FOURTH EMBODIMENT

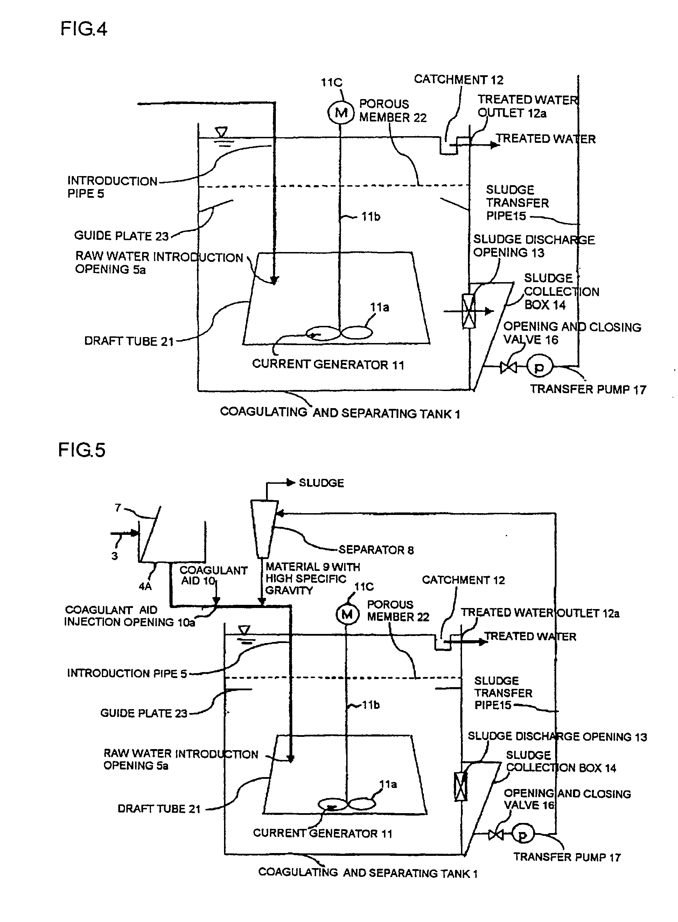

FIG. 4 is a main block diagram showing a fourth embodiment of a coagulating and separating apparatus according to the present invention. A repeated description will be omitted. The same reference numerals designate the same parts of the embodiment shown in FIG. 2. In the fourth embodiment, an inner end of the guide plate 23 is arranged higher than an outer end thereof. Thereby, in the coagulating and separating apparatus according the fourth embodiment, it is possible to obtain the similar effect to the second embodiment. Furthermore, it is possible to smoothly change the upflow flowing between the outer surface of the draft tube 21 and the inner surface of the coagulating an separating tank 1 into the horizontal flow (centripetal flow).

### FIFTH EMBODIMENT

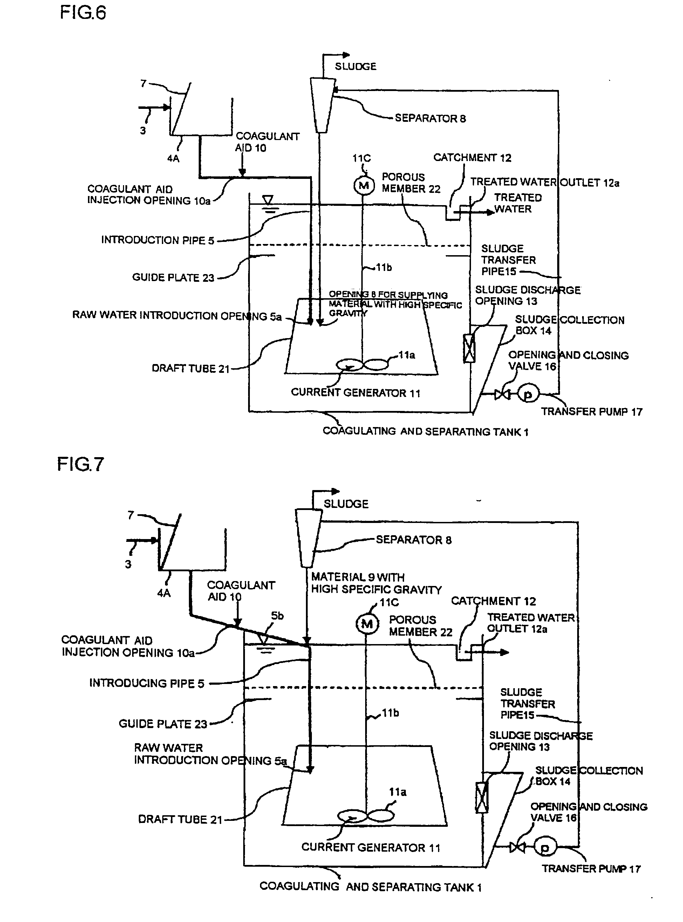

FIG. 5 is a block diagram showing a fifth embodiment of a coagulating and separating apparatus according to the present invention. A repeated description will be omitted. The same reference numerals designate the same parts of the embodiment shown in FIG. 2. In the fifth embodiment, the material 9 with high specific gravity is injected into the raw water introduction pipe 5 at the downstream side of the coagulant aid injection opening 10a. Therefore, the arrangement 4 for adding the high specific gravity in the second embodiment is configured as a raw water receiving tank 4A with only the screen 7. Even in the coagulating and separating apparatus of the fifth embodiment, it is possible to obtain the similar effect to that of the second embodiment. The position for adding the coagulant aid 10 may be before flowing the mixed liquid into the coagulating and separating tank 1. It may be mixed with the coagulant aid 10, however, just after introducing the mixed liquid near the raw water introduction opening 5a in the coagulating and separating tank 1.

### SIXTH EMBODIMENT

FIG. 6 is a main block diagram showing a sixth embodiment of a coagulating and separating apparatus according to the present invention. A repeated description will be omitted. The same reference numerals designate the same parts of the embodiment shown in FIG. 2. In the sixth embodiment, the material 9 with high specific gravity is poured directly into the coagulating and separating tank 1. In this case, an opening 8a for supplying the material with high specific gravity from the separator 8 is arranged near the raw water introduction pipe 5a so that the material 9 with high specific gravity will ride on the swirl flow in the draft tube 21 reliably. For that purpose, the arrangement 4 for adding the material with high specific gravity is configured as a raw water receiving tank 4A only with the screen 7. Even in the coagulating and separating apparatus in the sixth embodiment, it is possible to obtain the similar effect to that of the second embodiment.

### SEVENTH EMBODIMENT

FIG. 7 is a main block diagram showing a seventh embodiment of a coagulating and separating apparatus according to the present invention. A repeated description will be omitted. The same reference numerals designate the same parts of the embodiment shown in FIG. 2. In the seventh embodiment, an intermediate part 5b of the raw water introduction pipe 5 is inclined downwardly in a flowing direction. In addition, the material 9 with high specific gravity and the coagulant aid 10 are supplied to the lowest end of the intermediate part 5b of the raw water introduction pipe 5. Therefore, the arrangement 4 for adding the material with high specific gravity of the second embodiment is configured as the raw water receiving tank 4A only with the screen 7. The coagulating and separating apparatus of the seventh embodiment can obtain the similar effect to that of the second embodiment and accelerate the raw water by means of the inclined intermediate part 5b of the raw water introduction pipe 5 to accelerate the swirl flow in the draft tube 21.

### EIGHTH EMBODIMENT

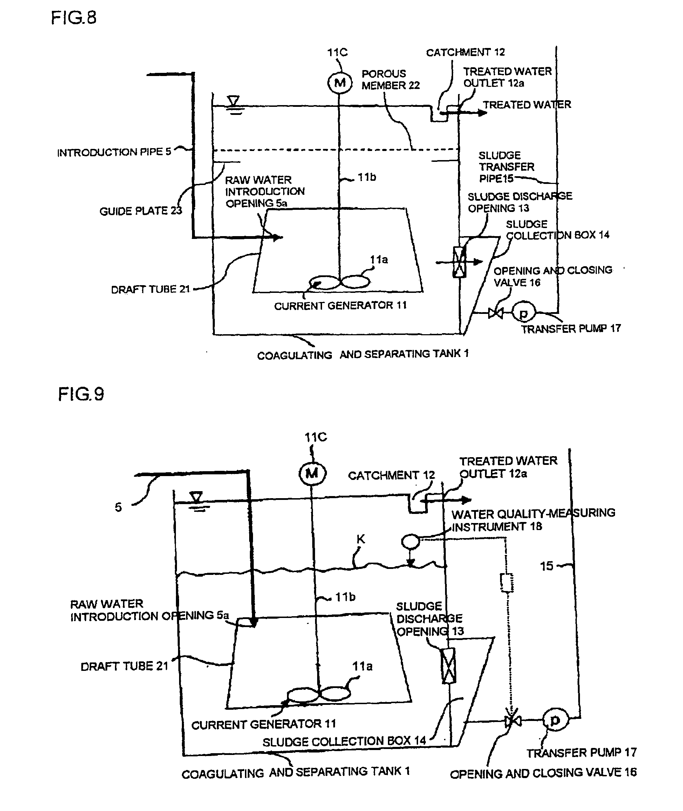

FIG. 8 is a main block diagram showing an eighth embodiment of a coagulating and separating apparatus according to the present invention. A repeated description will be omitted. The same reference numerals designate the same parts of the embodiment shown in FIG. 2. In the eighth embodiment, a raw water introduction opening 5a of the raw water introduction pipe 5 is introduced laterally from the coagulating and separating tank 1 into the draft tube 21. In detail, the raw water introduction pipe 5 penetrates a sidewall of the coagulating and separating tank 1 and a sidewall of the draft tube 21 so that the mixed liquid (liquid mixed with the raw water and coagulant 6) including the material 9 with high specific gravity and the coagulant aid 10 will ride on the swirl flow in the draft tube 21 reliably. In the coagulating and separating tank of the eighth embodiment, it is possible to obtain the similar effect to that of the second embodiment. Besides, it can prevent that the raw water introduced laterally short-circuits to flow out without sufficiently forming the floc.

### NINTH EMBODIMENT

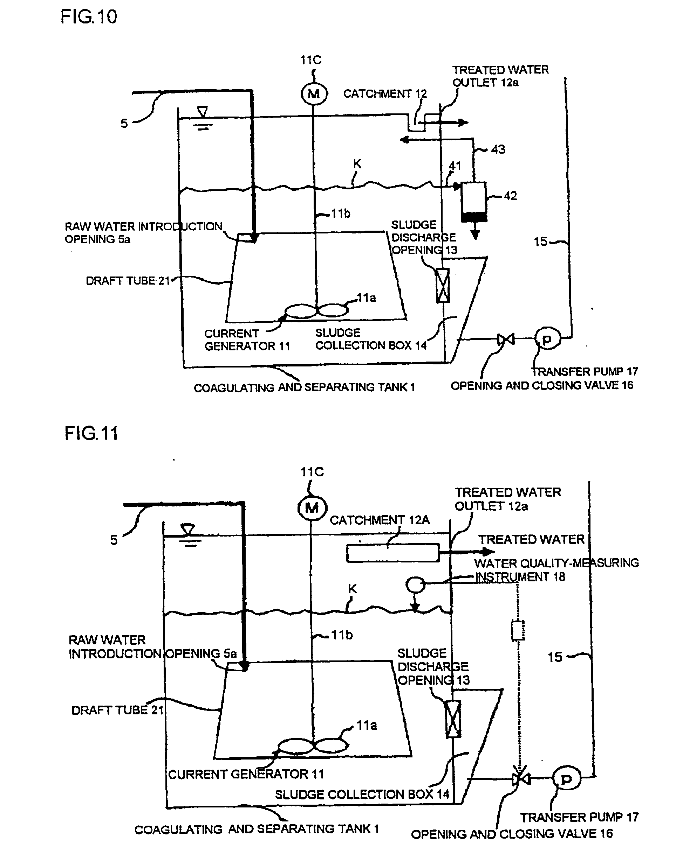

FIG. 9 is a main block diagram showing a ninth embodiment of a coagulating and separating apparatus according to the present invention. A repeated description will be omitted. The same reference numerals designate the same parts of the embodiment shown in FIG. 1. In the ninth embodiment, only the draft tube 21 is added to the coagulating and separating apparatus of the first embodiment. In this case, the position of the raw water introduction opening 5a of the raw water introduction pipe 5 and the position of the current generator 11 are similar to those of the second embodiment. In the coagulating and separating apparatus of the ninth embodiment, it is possible to obtain the similar effect to that of the first embodiment. Besides, it is possible to form the swirl flow by means of the draft tube 21 satisfactorily.

### 10th EMBODIMENT

FIG. 10 is a main block diagram showing a 10th embodiment of a coagulating and separating apparatus according to the present invention. A repeated description will be omitted. The same reference numerals designate the same parts of the embodiment shown in FIG. 1. In the 10th embodiment only the draft tube 21 is added to the coagulating and separating apparatus of the first embodiment, while the water quality-measuring instrument 18 of the first embodiment is omitted. In addition, a pipe 41, a tank 42, and a pipe 43 are provided. The pipe 41 is used for drawing out the sludge for controlling the height of the sludge interface K. The tank 42 is used for separating the sludge flowed out of the pipe 41 by the influence of gravity. The pipe 43 is used for returning supernatant water obtained in the tank 42 into the coagulating and separating tank 1. Therefore, an inner end of the pipe 41 is arranged so as to draw out the sludge at the sludge interface K and discharge the sludge settled in the tank 42 to the outside of the system. Even in the coagulating and separating apparatus of the 10th embodiment, it is possible to obtain the similar effect to that of the first embodiment. Besides, it is possible to form the swirl flow by means of the draft tube 21 satisfactorily.

### 11th EMBODIMENT

FIG. 11 is a main block diagram showing an 11th embodiment of a coagulating and separating apparatus according to the present invention. A repeated description will be omitted. The same reference numerals designate the same parts of the embodiment shown in FIG. 1. In the 11th embodiment, only the draft tube 21 is added to the coagulating and separating apparatus of the first embodiment. In addition, a catchment 12A with a filtering device is provided in the coagulating and separating tank 1, instead of the catchment 12 of the first embodiment. Even in the coagulating and separating apparatus of the 11th embodiment, it is possible to obtain the similar effect to that of the first embodiment. Besides, it is possible to form the swirl flow by means of draft tube 21 satisfactorily. In addition, it is possible to remove the treated water of low quality by means of the catchment 12A.

### 12th EMBODIMENT

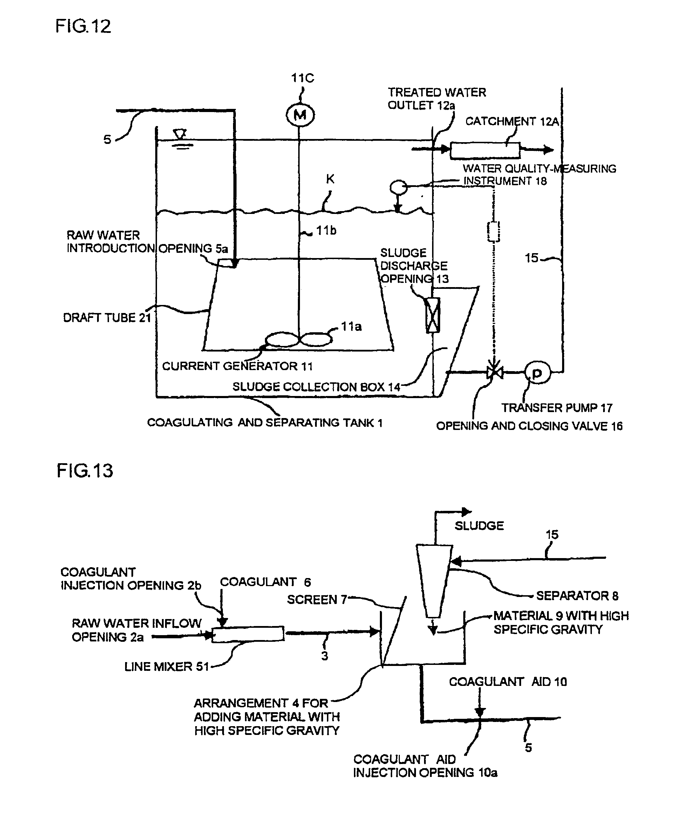

FIG. 12 is a main block diagram showing a 12th embodiment of a coagulating and separating apparatus according to the present invention. A repeated description will be omitted. The same reference numerals designate the same parts of the embodiment shown in FIG. 1. In the 12th embodiment, only the draft tube 21 is added to the coagulating and separating apparatus of the first embodiment. A catchment 12A with a filtering device is provided outside the coagulating and separating tank 1 instead of the catchment 12 of the first embodiment. Even in the coagulating and separating apparatus of the 12th embodiment, it is possible to obtain the similar effect to that of the first embodiment. Besides, it is possible to form the swirl flow by means of the draft tube 21 sufficiently.

### 13th EMBODIMENT

FIG. 13 is a main block diagram showing a 13th embodiment of a coagulating and separating apparatus according to the present invention. A repeated description will be omitted. The same reference numerals designate the same parts of the embodiment shown in FIG. 2. In the 13th embodiment, a line mixer 51 is provided instead of the mixing tank 2 of the second embodiment The line mixer 51 comprises a pipe and a screw. The pipe is the same as the raw water inflow opening 2a or the raw water-introducing pipe in bore diameter, for example. The screw is arranged in the pipe. Injecting the coagulant 6 into the raw water is only necessary to form the floc, even if the line mixer 51 is provided with only the pipe and without a screw. In order to form the floc satisfactorily, however, it is preferable to use a static mixer with a simple structure for generating swirling current in the inside thereof to promote stirring for mixing. As such an example, WESTFALL-INKA static injection mixer Madel2800 manufactured by NIHON INKA CO., LTD can be given. Even in the coagulating and separating apparatus of the 13th embodiment, it is possible to obtain the similar effect to that of the second embodiment.

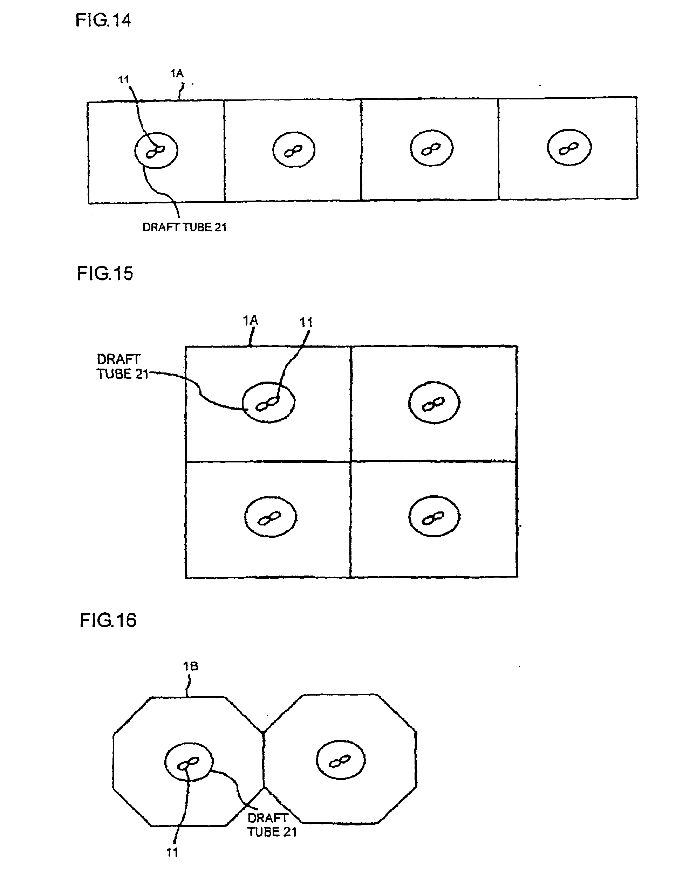

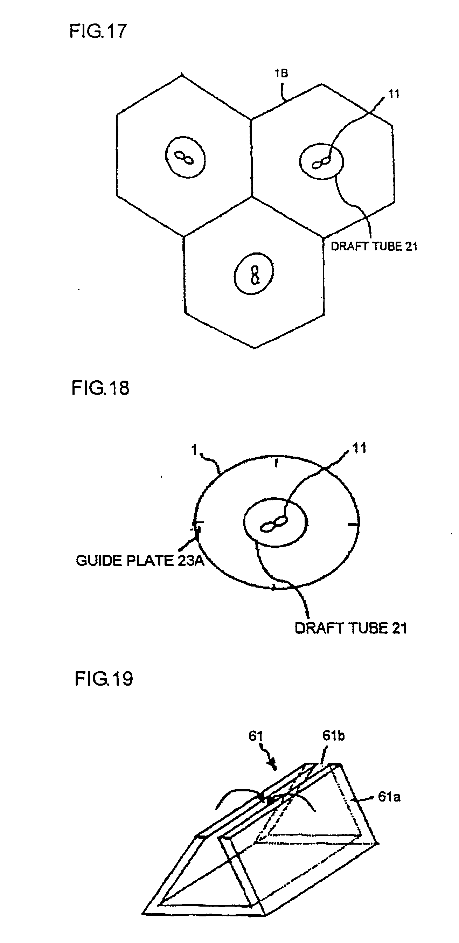

Thus, it was described that the draft tube 21 is provided with mainly the circular coagulating and separating tank 1 in the third to 13th embodiments. As shown in FIG. 14, however, it is possible to provide a plurality of rectangular coagulating and separating tanks 1A in series and further provide the draft tube 21 in each of the coagulating and separating tanks 1A. Thereby, one can deal with a case of independent reaction or change of inflow. In addition, as shown in FIG. 15, it is possible to arrange four rectangular coagulating and separating tanks 1A in a rectangular form. It is also possible to arrange the draft tube 21 in each of the coagulating and separating tanks 1A. In addition, as shown in FIG. 16, it is possible to arrange a plurality of octagonal coagulating and separating tanks 1B linearly. As shown in FIG. 17, it is possible to arrange a plurality of hexagonal coagulating and separating tanks 1B in a honeycombed way. In addition, it is possible to arrange a plurality of draft tubes in one coagulating and separating tank 1B so that they will not interfere with each other, although such configuration is not shown. In such a case, they need to be balanced with the properties of the current generator etc.

In the second to eighth, and 13th embodiments, it was described that the guide plate 23 is provided horizontally or substantially horizontally. A shape or a direction of the guide plate 23 is, however, not limited to the above, even if the guide plate 23 can generate the swirl flow efficiently. Particularly, if the coagulating and separating tank 1 has a cylindrical or extremely similarly to a cylindrical shape, it is preferable to provide a plurality of guide plates 23A vertically to prevent the swirl flow from co-rotation, as shown in FIG. 18. In other words, it is preferable to provide a plurality, four for example, of guide plates 23A on the inner surface of the round coagulating and separating tank 1 horizontally at regular intervals. In such a case, the guide plates 23A change the horizontal swirl flow generated as a stirring effect of the current generator 11 into the vertical flow by a baffle effect so as to straighten the flow of the water to be treated in the upward direction. It is possible to provide this kind of vertical guide plates 23A with one coagulating and separating tank 1 as well as the horizontal guide plate 23. In this case, it is possible to aid to straighten the upflow by the vertical guide plates 23A and to straighten the horizontal flow (centripetal flow) by the horizontal guide plate 23. If the coagulating and separating tank 1 is polygonal, however, since the inner surface limits co-rotation, it is sometimes unnecessary to provide the vertical guide plates 23A.

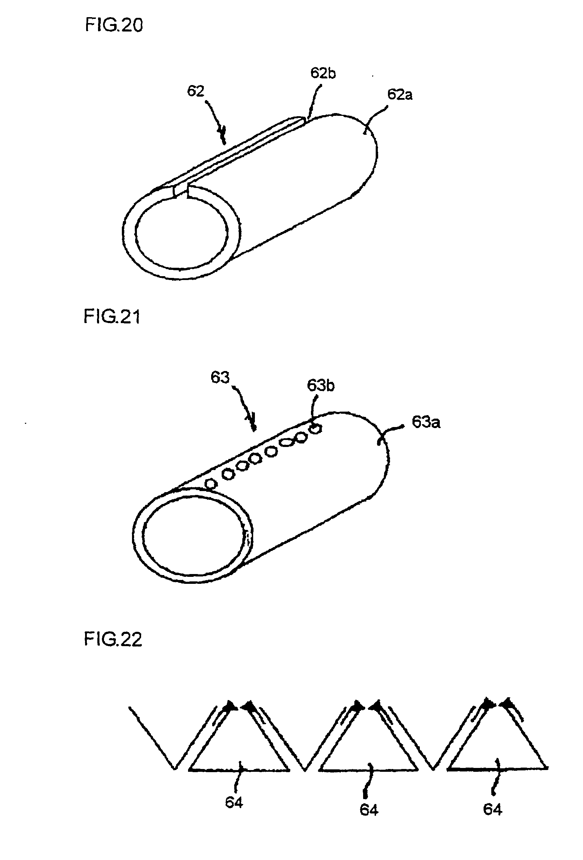

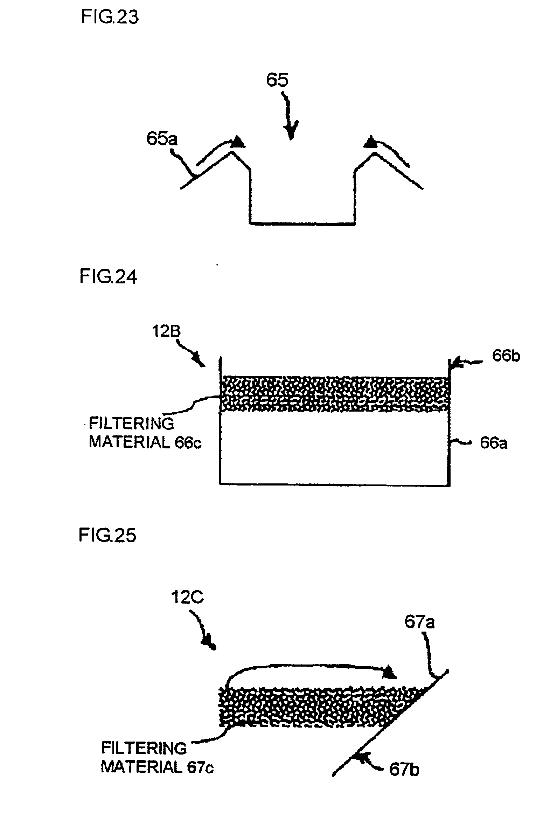

If a submergence type of a tough is used for the catchment 12 in the first to 13th embodiments, it is possible to use a trough 61 with an opening 61b extending in a longitudinal direction at the upper part of a triangular pipe 61a, as shown in FIG. 19. In addition, it is possible to use a trough 62 with an opening 62b extending in a longitudinal direction at the upper part of a circular pipe 62a, as shown in FIG. 20. In addition, it is possible to use a trough 63 with numerous small holes 63b linearly arranged in a longitudinal direction at the upper part of a circular pipe 63a, as shown in FIG. 21. In addition, it is possible to take a structure such that a plurality of triangular troughs 64 are combined, as shown in FIG. 22. Or, it is possible to use a trough 65 with inclined surfaces 65a, as shown in FIG. 23, although it is not the submergence type.

If change of properties such as concentration of the raw water is particularly large, and if treatment becomes unstable on measuring the sludge interface K and the concentration in the coagulating and separating tank 1, it is possible to use a catchment 12B. In the catchment 12B, a filtering material 66c or a straightening plate not shown in the figure etc, is mounted on a box 66b having vertical surfaces 66a, as shown in FIG. 24. Or, it is possible to use a catchment 12C. In the catchment 12C, a filtering material 67c is mounted on a box 67b having an inclined surface 67a, as shown in FIG. 25. In addition, it is possible to give filtering function also on the catchment 12 by providing with the filtering materials 66c, 67c as shown in FIG. 24, 25. In this case, it is possible to use spherical filtering material with a specific gravity of 1.0 or below for the filtering materials 66c, 67c. Even if the filtering materials have the specific gravity of 1.0 or more, however, it can be used similarly by arranging a screen etc. at the lower part of the filtering material. It is preferable to perform continuously circulating washing by utilizing airlifting action etc. to discharge the caught sludge to the outside of the system as washed drain. On the other hand, if change of properties of the raw water is not so large, it is possible to use a straightening plate with vertical or inclined flat boards arranged equally for the catchment 12 instead of the filtering materials 66c, 67c. Usually, it is appropriate to use the troughs 61 to 65 for collecting supernatant water from the water or water surface as shown in FIG. 19 to 23. Or it is appropriate to use a conduit not shown in the figures. They may be used depending on the properties of the raw water, etc.

### EXAMPLE

### FIRST EXAMPLE

The first embodiment of the coagulating and separating apparatus shown in FIG. 1 was implemented. As an implementing condition, inflow water of a first settling pond in a sewage-treatment plant was used as the raw water PAC was added to the raw water in an addition rate of 10mg/L (converted by Al₂O₃) to form the coagulant (inorganic coagulant) 6. Sands were added to the raw water in a concentration of 3,000mg/L to form the material 9 with high specific gravity. Highmolecular coagulant was added to the raw water in the concentration of 1mg/L to form the coagulant aid 10. Under the condition, results were obtained about a relationship between an amount of inflow water, residence time of the apparatus, raw water SS, treated water SS, SS removal rate, sludge concentration, and amount of drawn-out sludge, as shown in table 1. As seen from table 1, SS removal rate became 80% or more in ten minutes of the residence time of the apparatus. Thus, it was possible to obtain the treated water with good quality. The residence time of the apparatus became short on removing in 80% or more of SS removal rate. This is because the water quality-measuring instrument 18 balances the sludge surface, while addition of the material 9 with high specific gravity efficiently promote coagulation to form the heavy floc, thereby the swirl flow forms the sludge interface K in a short time.

### TABLE 1

### SECOND EXAMPLE

The second embodiment of the coagulating and separating apparatus shown in FIG. 2 was implemented. An implementing condition was similar to that of the first embodiment. Under the condition, results were obtained for a relationship between an amount of inflow water, residence time of the apparatus, raw water SS, treated water SS, SS removal rate, sludge concentration, and amount of drawn-out sludge, as shown in table 2. As seen from table 2, SS removal rate became 80% or more in three minutes of the residence time of the apparatus. Thus, it was possible to obtain the treated water with good quality. The residence time of the apparatus became short for removing in 80% or more of SS removal rate. This is because the draft tube 21 efficiently promotes coagulation of the floc to form the heavy floc, thereby the swirl flow forms the sludge interface K in a short time.

### TABLE 2

**Table 1**

| results of the apparatus of Figure 1 | | | | | | |
|---|---|---|---|---|---|---|
| amount of inflow water (m³/h) | residence time in appratus (min) | raw water SS (mg/l) | treated water SS (mg/l) | SS removal rate (%) | sludge concentration (mg/l) | amount of drawn-out sludge (m³/h) |
| 12.5 | 30 | 231 | 32 | 86 | 3,628 | 0,75 |
| 37.5 | 10 | 304 | 52 | 83 | 4,532 | 2.25 |
| 75 | 5 | 253 | 76 | 70 | 3,306 | 4.5 |

**Table 2**

| results of the apparatus of Figure 2 | | | | | | |
|---|---|---|---|---|---|---|
| amount of inflow water (m³/h) | residence time in appratus (min) | raw water SS (mg/l) | treated water SS (mg/l) | SS removal rate (%) | sludge concentration (mg/l) | amount of drawn-out sludge (m³/h) |
| 37.5 | 10 | 303 | 18 | 94 | 5,040 | 2.25 |
| 75 | 5 | 212 | 19 | 91 | 3,507 | 4.5 |
| 125 | 3 | 193 | 21 | 89 | 3,159 | 7.5 |

## Claims

1. A coagulating and separating apparatus comprising:
a coagulating and separating tank for containing a liquid mixture including raw water and coagulant;
a current generator for moving the liquid mixture so as to generate swirl flow of the liquid mixture within the coagulating and separating tank; and
a sludge transfer means for transferring the coagulated sludge.

2. The coagulating and separating apparatus according to claim 1, **characterized in that** a draft tube is provided in the coagulating and separating tank, and the current generator is placed within the draft tube so as to generate the swirl flow of the liquid mixture.

3. The coagulating and separating apparatus according to claim 1 or 2 **characterized in that** a material with high specific gravity is supplied into the coagulating and separating tank.

4. The coagulating and separating apparatus according to claim 3, **characterized in that** the sludge transfer means is connected to a separator for separating the material with high specific gravity from the coagulated sludge.

5. The coagulating and separating apparatus according to claim 2, **characterized in that** a porous member is provided over the draft tube within the coagulating and separating tank.

6. The coagulating and separating apparatus according to claim 2 or 5, **characterized in that** a pipe for feeding the liquid mixture into the draft tube is provided.

7. The coagulating and separating apparatus according to any one of claims 1 to 6, **characterized in that** the current generator is a stirrer having an axial-flow type of a stirring blade.

8. The coagulating and separating apparatus according to any one of claims 1 to 7, **characterized in that** a sludge collection box is provided at a bottom portion of the coagulating and separating tank for concentrating or thickening the coagulated sludge.

9. The coagulating and separating apparatus according to any one of claims 1 to 8, **characterized in that** a line mixer is provided for mixing the coagulant with the raw water so as to make the liquid mixture.

10. The coagulating and separating apparatus according to any one of claims 1 to 9, **characterized in that** a water quality-measuring means is provided at the coagulated separation tank.

11. The coagulating and separating apparatus according to any one of claims 1 to 10, **characterized in that** a water catchment is provided at an upper portion of the coagulating and separating tank for catching a water treated within the coagulating and separating tank, and feeding such treated water out of the coagulating and separating tank.
